# EUROPÄISCHE PATENTANMELDUNG

(11) **EP 4 410 657 A1**
(43) Veröffentlichungstag der Anmeldung: **07.08.2024**
(21) Anmeldenummer: 24153500.4
(22) Anmeldetag: 23.01.2024
(51) Int. Cl.: B63G 8/34

(54) **UNTERSEEBOOT UND VERFAHREN ZUR AKTIVEN UNTERDRÜCKUNG EINER ORTUNGSSCHALLWELLE**

(30) Priorität: 01.02.2023 DE 102023102469
(71) Anmelder: thyssenkrupp Marine Systems GmbH, 24143 Kiel (DE); thyssenkrupp AG, 45143 Essen (DE)
(72) Erfinder: Hövelmann, Norbert, 24768 Rendsburg (DE); Avsic, Tom, 24161 Altenholz (DE); Sachau, Delf, 22047 Hamburg (DE); Timmermann, Johannes, 20535 Hamburg (DE); Hostombe, Kevin, 30539 Hannover (DE)
(74) Vertreter: thyssenkrupp Intellectual Property GmbH

(57) **Zusammenfassung**

Die vorliegende Erfindung betrifft ein Unterseeboot 10 mit aktiver Reduktion der Schallrückstrahlung, wobei das Unterseeboot 10 wenigstens einen ersten Schallsensor 50 aufweist, wobei das Unterseeboot 10 wenigstens einen ersten Aktor 60 aufweist, wobei das Unterseeboot 10 eine Verarbeitungsvorrichtung 70 aufweist, wobei die Verarbeitungsvorrichtung 70 mit dem ersten Schallsensor 50 zur Übertragung von durch den ersten Schallsensor 50 empfangenen ersten Schallinformationen verbunden ist, wobei die Verarbeitungsvorrichtung 70 zur Berechnung einer zweiten Schallinformation ausgebildet ist, wobei die Verarbeitungsvorrichtung 70 zur Übertragung der zweiten Schallinformation mit dem ersten Aktor 60 verbunden ist, wobei der erste Aktor 60 zur Aussendung eines Schallimpulses entsprechend der zweiten Schallinformationen ausgebildet ist.

## Beschreibung

Die Erfindung betrifft ein Unterseeboot und ein Verfahren zur aktiven Unterdrückung einer Schallwelle, welche an einem Unterseeboot reflektiert wird.

Bei der Ortung von Unterseebooten wird üblicherweise ein Aktivsonar eingesetzt, welches eine Schallwelle aussendet und die von dem Unterseeboot reflektierte Welle detektiert. Um dieses aus der Sicht des Unterseebootes zu verhindern, gibt es primär derzeit zwei grundlegende Ansätze.

Beim ersten Ansatz kommen schallabsorierende Materialien auf der Außenhaut zum Einsatz. Somit wird die ankommende Schallwelle absorbiert und nicht reflektiert. Dieses funktioniert insbesondere für hohe Frequenzen vergleichsweise gut.

Der zweite Ansatz beruht auf der Formgebung der Außenhaut mit dem Ziel, die reflektierte Welle vom Sender weg zu reflektieren oder zu zerstreuen. Eine solche Form ist beispielsweise der DE 10 2016 014 108 A1 entnehmbar. Dieses funktioniert insbesondere im mittelfrequenten Bereich vergleichsweise gut.

Insbesondere für den tieffrequenten Bereich ist damit jedoch nicht immer eine befriedigende Lösung gefunden.

Aus der DE 10 2017 120 379 A1 ist eine Gegenschallplatte und ein Wasserfahrzeug bekannt.

Aus der DE 196 23 127 C1 ist ein Schallabsorber bekannt.

Aufgabe der Erfindung ist es, ein Unterseeboot bereitzustellen, welches insbesondere für eine Ortung mittels Aktivsonar im tieffrequenten Bereich besonders wenig anfällig ist.

Gelöst wird diese Aufgabe durch das Unterseeboot mit den in Anspruch 1 angegebenen Merkmalen sowie durch das Verfahren mit den in Anspruch 11 angegeben Merkmalen.

Vorteilhafte Weiterbildungen ergeben sich aus den Unteransprüchen, der nachfolgenden Beschreibung sowie den Zeichnungen.

Das erfindungsgemäße Unterseeboot ist zur aktiven Reduktion der Schallrückstrahlung ausgebildet. Eine aktive Reduktion der Schallrückstrahlung erfolgt prinzipiell ähnlich wie bei der aktiven Lärmkompensation durch Aktoren, die die Reflexion der Schallwellen reduzieren. Jedoch wird hierzu bei dem in der Erfindung zum Einsatz kommenden Verfahren die akustische Wandimpedanz der Bootsstruktur aktiv derart beeinflusst, dass die auftreffende Schallwelle weitestgehend absorbiert wird. Das Unterseeboot weist eine Bootsstruktur auf. Die Bootsstruktur besteht insbesondere aus dem Druckkörper und der Außenhülle, wobei Druckkörper und Außenhülle auch bereichsweise identisch sein können. Die Bootsstruktur des Unterseeboots weist wenigstens einen ersten Schallsensor auf. Der erste Schallsensor dient dazu, eine ankommende Schallwelle, insbesondere eine ankommende Schallwelle eines Aktivsonars zu detektieren. Weiter weist das Unterseeboot wenigstens einen ersten Aktor auf. Der erste Aktor dient dazu, die Wandimpedanz der Bootsstruktur zum Zwecke der Absorption anzupassen. Hierzu wird die Oberfläche des Aktuators derart zur ankommenden Schallwelle synchronisiert, sodass diese nicht an der Oberfläche reflektiert wird. Die Wandimpedanz wird so verändert, dass der Anteil des reflektierten Schalls möglichst gering ist, vorzugsweise eben auf null sinkt. Insbesondere ist die Dissipation der Schallenergie dadurch besonders hoch, vorzugsweise geht diese gegen 1. Das Unterseeboot weist eine Verarbeitungsvorrichtung auf. Die Verarbeitungsvorrichtung ist mit dem ersten Schallsensor zur Übertragung von dem ersten Schallsensor empfangenen ersten Schallinformationen verbunden. Die Verarbeitungsvorrichtung ist zur Berechnung einer zweiten Schallinformation ausgebildet. Die zweite Schallinformation dient dazu, ein Signal zur Steuerung des wenigstens einen Aktors erzeugen zu können, damit die Wandimpedanz der Oberfläche so verändert wird, dass die ankommende Schallwelle absorbiert wird. Die Verarbeitungsvorrichtung ist zur Übertragung der zweiten Schallinformation mit dem ersten Aktor verbunden. Der erste Aktor ist zur Anpassung der akustischen Wandimpedanz der Bootsstruktur im Bereich des ersten Aktors entsprechend der zweiten Schallinformationen ausgebildet. Hierdurch ist es möglich, die Reflexion der ankommenden Welle wenigstens abzuschwächen und so einer Detektion durch einem dem Sender benachbarten Empfänger der normalerweise reflektierten Schallwelle zu entgehen.

Entscheidend ist, dass im Gegensatz zu beispielsweise der bei Kopfhörern verbreiteten aktiven Lärmkompensation durch den Aktor hier zum einen ausschließlich auf eine reflektierte Welle abgezielt wird. Es soll also nicht der durch die Außenhülle hindurchtretende Umgebungsschall an einem bestimmten Punkt abgeschwächt werden, wie beispielsweise bei der Kompensation von Umgebungsgeräuschen bei einem Kopfhörer vor dem Trommelfell. Zum anderen ist die Schallgeschwindigkeit in Wasser deutlich höher als in Luft. Beide Unterschiede verhindern eine einfache Übertragung der für Luftschall gebräuchlichen Verfahren (Active Noise Cancellation), um damit die Signatur eines Unterseebootes zu optimieren. Insbesondere die Active Noise Control Verfahren sind regelmäßig auf eine lärmfreie Zone, beispielsweise das Ohr (der Gehörgang) im Falle entsprechender Kopfhörer, ausgelegt und nicht auf eine vollständige Lärmfreiheit der Umgebung.

In einer weiteren Ausführungsform der Erfindung weist das Unterseeboot mindestens einen zweiten Schallsensor auf. Dieser dient zur Auswertung des Regelfehlers, der sich aus dem reflektierten Teil der Schallwelle an der Fahrzeugoberfläche ergibt. Die Verarbeitungsvorrichtung ist mit dem zweiten Schallsensor verbunden. Der zweite Schallsensor dient dazu, insbesondere die reflektierte Welle zu erfassen. Dadurch ist eine Auswertung der tatsächlichen Auslöschung der Schallwelle möglich. Hierdurch lässt sich in einer aktiven Regelung ein Regelfehler identifizieren und korrigieren.

In einer weiteren Ausführungsform der Erfindung ist hinter dem Aktor eine schallabsorbierende Schicht angeordnet. Hierdurch wird durch den Aktor transmittierter Schall absorbiert, bevor er beispielsweise an einem darunter liegenden Druckkörper reflektiert werden kann.

In einer weiteren Ausführungsform der Erfindung ist hinter dem Aktor ein Transmissionssensor angeordnet. Dadurch kann der durch den Aktor transmittierte Schall und/der den transmittierten und beispielsweise vom Druckkörper reflektierten Schall ermittelt werden. Insbesondere kann dieser auch in die Berechnung der Wandimpedanz einbezogen werden.

In einer weiteren Ausführungsform der Erfindung ist der wenigstens eine erste Schallsensor am Ruder angeordnet. Besonders bevorzugt ist das Ruder ein Tiefenruder. Diese Anordnung hat den Vorteil, dass der erste Schallsensor einen Abstand zur Außenhülle des Unterseebootes aufweist, sodass zwischen der Detektion der ankommenden Schallwelle und ihrer Reflexion an der Außenhülle eine Signallaufzeit vergeht, in der die zu erzeugende Bewegung des Aktors berechnet werden kann. Ein weiterer Vorteil der Anordnung ist, dass auch eine schnelle, insbesondere kontinuierliche Änderung der ankommenden Schallwelle eine Auslöschung begünstigt. Besonders bevorzugt ist der wenigstens eine erste Schallsensor am bootsabgewandten Ende des Ruders angeordnet. Hierdurch wird der Abstand maximiert und dadurch auch die zur Verfügung stehende Zeit bis zum Eintreffen der Schallwelle an der Oberfläche.

In einer weiteren Ausführungsform der Erfindung weist das Unterseeboot wenigstens zwei erste Schallsensoren auf. Die zwei ersten Schallsensoren sind bevorzugt in Längsrichtung des Unterseebootes voneinander beanstandet angeordnet. Beispielswiese ist ein erster erster Schallsensor am vorderen äußeren Ende des Ruders und ein zweiter erster Schallsensor am hinteren äußeren Ende des Ruders angeordnet. Beispielsweise kann ein erster Schallsensor am bugseitigen Tiefenruder und ein anderer erster Schallsensor am Kreuz- oder X-Ruder am Heck angeordnet sein. Bevorzugt ist die Mehrzahl der ersten Schallsensoren sowohl an Steuerbord und an Backbord vorgesehen.

In einer weiteren Ausführungsform der Erfindung ist der erste Schallsensor auf der Außenhaut und der erste Aktor unterhalb der Außenhaut, beispielsweise und bevorzugt auf dem Druckkörper, angeordnet. Hierbei ist die Außenhaut vor dem Aktor bevorzugt transparent für die Schallwelle oder so dünn ausgeführt, dass ein überwiegender Teil der Schallwelle durch die Außenhaut durchtritt. Hierdurch wird es möglich, eine große Anzahl an ersten Schallsensoren möglichst flächig über die Außenhaut des Unterseebootes zu verteilen, was wiederum eine sehr genaue Ermittelung einer eintreffenden Schallwelle ermöglicht.

In einer weiteren Ausführungsform der Erfindung ist der wenigstens eine erste Aktor auf, an oder in der Außenhülle des Unterseebootes angeordnet. Beispielsweise und bevorzugt ist der erste Aktor flächig auf der Außenhülle angeordnet.

In einer weiteren Ausführungsform der Erfindung ist der wenigstens eine erste Aktor im Turm des Unterseebootes angeordnet. Operative und konstruktive Zwänge können verhindern, dass die seitlichen Turmwände genügend stark geneigt werden, um die reflektierte Welle vom Sender weg zu reflektieren oder zu zerstreuen. Daher kann gerade die Fläche des Turms, Insbesondere die Seitenfläche des Turms, die für die Rückstrahlung besonders relevante Fläche sein, da diese vergleichsweise großflächig und vergleichsweise eben sind. Es kann daher vorteilhaft sein, gerade hier den ersten Aktor anzuordnen.

In einer weiteren Ausführungsform der Erfindung weist die Verarbeitungsvorrichtung einen integrierten Schaltkreis in Form eines Field Programmable Gate Array auf. Neben dem offensichtlichen Vorteil bei Fertigung kleiner Stückzahlen hat sich gerade das Field Programmable Gate Array (FPGA) als besonders schnell für die notwendigen Berechnungen herausgestellt. Zudem zeichnen sich FPGA durch geringe Signallaufzeiten auf, welche bei den hohen Schallgeschwindigkeiten im Wasser von Vorteil sind.

In einer weiteren Ausführungsform der Erfindung sind der erste Schallsensor und der erste Aktor auf einen Frequenzbereich von wenigstens 200 bis 1500 Hz, bevorzugt 10 bis 3000 Hz, ausgebildet. Dieser Bereich des tieffrequenten Wasserschalls kann durch die beiden bekannten Maßnahmen vergleichsweise weniger abgeschwächt werden, sodass hier der Effekt durch eine aktive Schallabschwächung am deutlichsten ist.

In einer weiteren Ausführungsform der Erfindung weisen der erste Schallsensor und der erste Aktor einen Abstand von wenigstens 1 m auf. Insbesondere ist der erste Schallsensor wenigstens 1 m vor der Außenhülle angeordnet, beispielsweise am Tiefenruder.

In einer weiteren Ausführungsform der Erfindung weist das Unterseeboot eine Vielzahl an Aktoren auf, wobei die Außenhülle des Unterseebootes in besonders ebenen Bereichen (Turm, Ruder, ...) zu wenigstens 20 % mit der Vielzahl an Aktoren bedeckt ist. Diese Ausführungsform ist bevorzugt, wenn die Aktoren in Form von Folien ausgeführt sind.

In einer weiteren alternativen Ausführungsform ist eine Vielzahl an Aktoren, welche selber eine sehr geringe Fläche aufweisen über eine vergleichsweise große Fläche der Außenhülle des Unterseebootes verteilt. Beispielsweise kann eine Vielzahl an Aktoren, über die gesamte Fläche des Turmes möglichst gleichmäßig verteilt werden und dabei selber weniger als 30 % der Oberfläche der Außenhaut des Turmes bedecken. Es kann dabei eine Verarbeitungsvorrichtung für alle Aktoren vorgesehen sein, die alle Aktoren ansteuert. Weiter kann vorgesehen sein, dass nicht jeder Aktor einen eigenen ersten, zweiten oder dritten Schallsensor aufweist, sondern die Schallsignale der Schallsensoren für alle Aktoren verwendet werden. Bevorzugt werden alle Schallsensoren und alle Aktoren auf der Backbordseite und alle Schallsensoren und Aktoren auf der Steuerbordseite jeweils zusammengeschaltet und bilden somit zwei getrennte Gruppen.

In einer weiteren Ausführungsform der Erfindung weist das Unterseeboot wenigstens einen dritten Schallsensor auf. Der dritte Schallsensor ist dabei zum ersten Aktor beabstandet, wobei der Abstand bevorzugt geringer ist als der Abstand zwischen dem ersten Aktor und dem ersten Schallsensor. Der dritte Schallsensor kann beispielswiese ebenfalls an dem Ruder, jedoch näher an der Außenhaut, angeordnet sein. Die Verarbeitungsvorrichtung ist mit dem dritten Schallsensor zur Übertragung von durch den ersten Schallsensor empfangenen dritten Schallinformationen verbunden. Die Verarbeitungsvorrichtung ist zur Berechnung der Schallausbreitungsrichtung aus der ersten Schallinformation und der dritten Schallinformation ausgebildet. Ist bekannt, aus welcher Richtung genau die ankommende Schallwelle kommt, so lässt sich leicht vorhersagen, wann und in welcher Phasenlage die ankommende Schallwelle auf welchen Bereich des Unterseebootes treffen wird.

In einem weiteren Aspekt betrifft die Erfindung ein Verfahren zur aktiven Unterdrückung einer Schallreflexion an Bord eines erfindungsgemäßen Unterseebootes. Das Verfahren weist die folgenden Schritte auf:
a) Detektieren einer eintreffenden Schallwelle mit dem ersten Schallsensor und Erzeugen einer ersten Schallinformation,
b) Übertragen der ersten Schallinformation von dem ersten Schallsensor zur Verarbeitungsvorrichtung,
c) Erzeugen einer zweiten Schallinformation zur Erzeugung einer zur zu erwartenden Absorption der eintreffenden Schallwelle in Amplitude und Phasenwinkel angepassten Wandimpedanz der Bootsstruktur,
d) Übertragung der zweiten Schallinformation von der Verarbeitungsvorrichtung zum ersten Aktor,
e) Zeitgleiche Anpassung der Wandimpedanz mit der eintreffenden Schallwelle.

Im Gegensatz zu beispielsweise Kopfhörern mit einer Unterdrückung der Umgebungsgeräusche ist hier zum einen eine andere Geometrie, zum anderen eine andere Größenordnung gegeben. Während beispielsweise bei einem Kopfhörer zum einen der durchtretende Schall unterdrückt werden soll und zum anderen nur der kleine Bereich des äußeren Gehörganges des Ohrs entsprechend beeinflusst werden soll, ist bei einem Unterseeboot die Situation eine andere. Es soll eine Reflexion einer ankommenden Schallwelle unterdrückt werden, um die Abstrahlung in die Weite der See zu unterbinden.

In einer weiteren Ausführungsform der Erfindung weist das Verfahren zusätzlich die Schritte auf:
a1) Detektieren einer eintreffenden Schallwelle mit dem dritten Schallsensor und erzeugen einer dritten Schallinformation,
b1) Übertragen der dritten Schallinformation von dem dritten Schallsensor zur Verarbeitungsvorrichtung,
c1) Ermitteln einer Schallrichtungsinformation aus der ersten Schallinformation und der dritten Schallinformation.

Dieses ist besonders bevorzugt, wenn das Unterseeboot mehr als nur einen Aktor, insbesondere eine Vielzahl an Aktoren aufweist. In diesem Fall ist es sinnvoll die Richtung der eintreffenden Schallwelle detektieren zu können. Mit der Richtungs- und Zeitinformation kann eine Ansteuerung der verschiedenen Aktoren ermöglicht werden, derart, dass die Aktoren zum Zeitpunkt des Auftreffens der Schallwelle so angesteuert werden, dass sie die Schallwelle absorbieren. Insbesondere bei einer schräg eintreffenden Schallwelle, führt dies zu unterschiedlichen Zeitpunkten des Auftreffens auf die Aktoren und somit zu einem zeitversetzten Ansteuern.

Es kann auch vorgesehen sein, dass beispielsweise ein erster Schallsensor und ein erster Aktor an Backbord und ein dritter Schallsensor und ein zweiter Aktor an Steuerbord angeordnet sind. Dieses kann beispielsweise dann sinnvoll sein, wenn durch das erfindungsgemäße Verfahren nur ankommende Schallwellen betrachtet werden sollen, welche annährend senkrecht zum Beispiel auf die Turmfläche und somit quer zur Schiffslängsrichtung eintreffen. Da die Turmflächen die größten ebenen Flächen darstellen, wohingegen der Schiffskörper selbst durch seine abgerundete Form eine Zerstreuung der reflektierten Schallwelle bewirkt, ist somit die Reflexion senkrecht zu dieser Fläche diejenige, welche die höchste Verratswahrscheinlichkeit aufweist. Daher ist bereits die ausschließliche Unterdrückung dieser besonders effizient zur Verringerung der Signatur.

In einer weiteren Ausführungsform der Erfindung wird in Schritt c) der Frequenzbereich von 200 bis 1500 Hz, bevorzugt von 10 bis 3000 Hz, betrachtet.

In einer weiteren Ausführungsform der Erfindung weist das Unterseeboot ein Sonarsystem auf. Das Sonar analysiert ankommende Schallwellen und erfasst dabei den Frequenzbereich sowie die frequenzabhängige Intensität. Sobald eine Schallwelle in einem passenden Frequenzbereich und einer Amplitude eintrifft, welche die Detektion durch eine Reflektion dieser Schallwelle möglich machen, wird die Richtung und die Frequenz bestimmt, aus welcher die Schallwelle eintrifft. Insbesondere bei folgenden Schallwellen kann dann der Schall dieser Quelle besonders effizient durch die Anpassung der Wandimpedanz neutralisiert werden. Das Sonarsystem ist zur Ortung von Kontakten mittel des Empfangs und der Analyse von Wasserschall ausgebildet. Kontakt bedeutet in diesem Zusammenhang insbesondere Schallemittenten im oder auf dem Wasser, also vor allem andere Wasserfahrzeuge. Dieses bedeutet, dass das Sonarsystem in der Lage ist, wenigstens die Richtung eines Kontakts (und damit bei Überwasserfahrzeugen die Position) zu ermitteln. Weiter werden die Kontakte hinsichtlich der Fähigkeit zur Verwendung eines Aktivsonars ausgewertet. Kann ein Kontakt beispielsweise als Handelsschiff identifiziert werden, so ist davon auszugehen, dass ein Handelsschiff kein militärisches Aktivsonar aufweist. Damit ist die Wahrscheinlichkeit, dass von einem Handelsschiff eine entsprechende Schallwelle ausgesendet wird, minimal. Wird der Kontakt hingegen als Fregatte mit Fähigkeiten zur Unterseebootbekämpfung identifiziert, so ist die Wahrscheinlichkeit vergleichsweise hoch, dass gerade dieser Kontakt eine entsprechende Schallwelle zum Auffinden eines Unterseebootes aussendet. Auch innerhalb eines Konvois aus militärischen Schiffen ergibt sich daher eine hohe Wahrscheinlichkeit, dass zumindest einige der Schiffe über Aktivsonar verfügen und welche Schiffe ein solches einsetzen werden, beispielsweise auch aus der Position innerhalb eines Konvois. Das Sonarsystem übergibt Positionsdaten potentieller Kontakte mit Aktivsonar an die Verarbeitungsvorrichtung. Damit kennt die Verarbeitungsvorrichtung die wahrscheinliche Richtung einer möglicherweise eintreffenden Schallwelle bereits im Voraus. Die Verarbeitungsvorrichtung schätzt daher aus den übergebenen Positionsdaten eine Schallwellenrichtung ab. Diese Schallwellenrichtungsabschätzung wird in Schritt c) verwendet. Hierdurch kann im Zeitpunkt der Detektion einer ankommenden Schallwelle die zusätzliche Information genutzt werden, um die Algorithmen zu beschleunigen oder ihre Präzision zu verbessen.

In einer weiteren Ausführungsform der Erfindung ist das Unterseeboot mit wenigstens einem ersten autonomen oder ferngesteuerten Unterwasserfahrzeug oder alternativ einem geschleppten Körper, beispielsweise einer Boje, verbunden. Beispielsweise kann die Verbindung ein Kupferkabel oder ein Glasfaserkabel sein. Das autonome oder ferngesteuerte Unterwasserfahrzeug oder die Boje weist einen vierten Schallsensor auf. Der vierte Schallsensor übermittelt vierte Schallinformationen an die Verarbeitungsvorrichtung. Durch die Verwendung eines autonomen oder ferngesteuerten Unterwasserfahrzeugs kann die Entfernung zwischen dem vierten Schallsensor und der Außenhülle deutlich gesteigert werden, was wiederum zusätzliche Zeit zur Optimierung der Auslöschung der Reflexion verschafft. Zusätzlich kann es mit/bei mehreren autonomen oder ferngesteuerten Unterwasserfahrzeugen durch eine größere Verteilung leichter sein, den Winkel der ankommenden Schallwelle genau zu bestimmen.

Nachfolgend ist das erfindungsgemäße Unterseeboot anhand in den Zeichnungen dargestellten Ausführungsbeispielen näher erläutert.
- Fig. 1: erstes beispielhaftes Unterseeboot
- Fig. 2: zweites beispielhaftes Unterseeboot

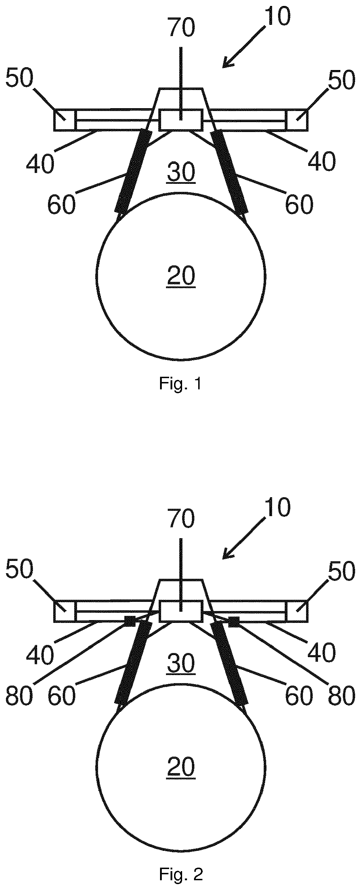

In Fig. 1 ist ein stark schematischer Querschnitt eines ersten beispielhaften Unterseebootes 10 gezeigt. Das Unterseeboot 10 ist symmetrisch aufgebaut, sodass sowohl von Backbord als auch von Steuerbord ankommende Schallwellen abgeschwächt werden können. Das Unterseeboot 10 weist einen Druckkörper 20, einen Turm 30 und ein an dem Turm 30 angeordnetes Ruder 40 auf. An den Enden des Ruders 40 befinden sich Schallsensoren 50, die eine eintreffende Schallwelle detektieren können. An den Seitenflächen des Turms 30 sind Aktoren 60 angeordnet. Die Schallsensoren 50 und die Aktoren 60 sind mit der Verarbeitungsvorrichtung 70 verbunden. Kommt nun von einer Seite eine Schallwelle an, welche von einem anderen Schiff zur Ortung von Unterseebooten ausgesendet wurde, so trifft diese zunächst auf einen Schallsensor 50 und wird so detektiert. Der Schallsensor 50 übermittelt die daraus ermittelten ersten Schallinformationen an die Verarbeitungsvorrichtung 70. Die Verarbeitungsvorrichtung 70 ist bevorzugt als Field Programmable Gate Array ausgebildet, was eine besonders schnelle Verarbeitung der ersten Schallinformation zur Erzeugung einer zweiten Schallinformation ermöglicht. Die zweiten Schallinformationen werden von der Verarbeitungsvorrichtung 70 an den Aktor 60 übergeben und dort wird dann die Wandimpedanz am Außenkörper so angepasst, dass es bestenfalls zur vollständigen Absorption der ankommenden Schallwelle kommt. Dadurch kann das Unterseeboot 10 nicht mehr mittels eines aktiven Sonars detektiert werden.

Das in Fig. 2 gezeigte zweite beispielhafte Unterseeboot 10 unterscheidet sich von dem in Fig. 1 gezeigtem ersten beispielhaften Unterseeboot nur in zwei zusätzlichen zweiten Schallsensoren 80, durch welche ein möglicher Rest an reflektierter oder emittierter Schallwelle erfasst werden kann. Die zweiten Schallsensoren 80 sind auch mit der Verarbeitungsvorrichtung 70 verbunden. Somit ein vollständiger Regelkreis möglich, um die Wandimpedanz optimal anzupassen und somit die ankommende Schallwelle so optimal wie möglich zu absorbieren.

### Bezugszeichen

- 10: Unterseeboot
- 20: Druckkörper
- 30: Turm
- 40: Ruder
- 50: Schallsensor
- 60: Aktor
- 70: Verarbeitungsvorrichtung
- 80: zweiter Schallsensor

## Patentansprüche

1. Unterseeboot (10) mit aktiver Reduktion der Schallrückstrahlung, wobei das Unterseeboot (10) eine Bootsstruktur aufweist, wobei das Unterseeboot (10) wenigstens einen ersten Schallsensor (50) aufweist, wobei die Bootsstruktur des Unterseeboots (10) wenigstens einen ersten Aktor (60) aufweist, wobei das Unterseeboot (10) eine Verarbeitungsvorrichtung (70) aufweist, wobei die Verarbeitungsvorrichtung (70) mit dem ersten Schallsensor (50) zur Übertragung von durch den ersten Schallsensor (50) empfangenen ersten Schallinformationen verbunden ist, wobei die Verarbeitungsvorrichtung (70) zur Berechnung einer zweiten Schallinformation ausgebildet ist, wobei die Verarbeitungsvorrichtung (70) zur Übertragung der zweiten Schallinformation mit dem ersten Aktor (60) verbunden ist, wobei der erste Aktor (60) zur Anpassung der akustischen Wandimpedanz der Bootsstruktur im Bereich des ersten Aktors (60) entsprechend der zweiten Schallinformationen ausgebildet ist.

2. Unterseeboot (10) nach Anspruch 1, **dadurch gekennzeichnet, dass** der wenigstens eine erste Schallsensor (50) am Ruder (40) angeordnet ist.

3. Unterseeboot (10) nach Anspruch 2, **dadurch gekennzeichnet, dass** der wenigstens eine erste Schallsensor (50) am bootsabgewandten Ende des Ruders (40) angeordnet ist.

4. Unterseeboot (10) nach einem der vorstehenden Ansprüche, **dadurch gekennzeichnet, dass** das Unterseeboot mindestens einen zweiten Schallsensor aufweist.

5. Unterseeboot (10) nach einem der vorstehenden Ansprüche, **dadurch gekennzeichnet, dass** der wenigstens eine erste Aktor (60) auf, an oder in der Außenhülle des Unterseebootes (10) angeordnet ist.

6. Unterseeboot (10) nach einem der vorstehenden Ansprüche, **dadurch gekennzeichnet, dass** der wenigstens eine erste Aktor (60) am Turm (30) des Unterseebootes (10) angeordnet ist.

7. Unterseeboot (10) nach einem der vorstehenden Ansprüche, **dadurch gekennzeichnet, dass** die Verarbeitungsvorrichtung (70) einen integrierten Schaltkreis in Form eines Field Programmable Gate Array aufweist.

8. Unterseeboot (10) nach einem der vorstehenden Ansprüche, **dadurch gekennzeichnet, dass** der erste Schallsensor (50) und der erste Aktor (60) auf einen Frequenzbereich von wenigstens 200 bis 1500 Hz, bevorzugt 10 bis 3000 Hz, ausgebildet sind.

9. Unterseeboot (10) nach einem der vorstehenden Ansprüche, **dadurch gekennzeichnet, dass** der erste Schallsensor (50) und der erste Aktor (60) einen Abstand von wenigstens 1 m aufweisen.

10. Unterseeboot (10) nach einem der vorstehenden Ansprüche, **dadurch gekennzeichnet, dass** das Unterseeboot (10) wenigstens einen dritten Schallsensor (50) aufweist, wobei die Verarbeitungsvorrichtung (70) mit dem dritten Schallsensor (50) zur Übertragung von durch den ersten Schallsensor (50) empfangenen dritten Schallinformationen verbunden ist, wobei die Verarbeitungsvorrichtung (70) zur Berechnung der Schallausbreitungsrichtung aus der ersten Schallinformation und der dritten Schallinformation ausgebildet ist.

11. Verfahren zur aktiven Unterdrückung einer Schallreflexion an Bord eines Unterseebootes (10) nach einem der vorstehenden Ansprüche, wobei das Verfahren die folgenden Schritte aufweist:
a) Detektieren einer eintreffenden Schallwelle mit dem ersten Schallsensor (50) und Erzeugen einer ersten Schallinformation,
b) Übertragen der ersten Schallinformation von dem ersten Schallsensor (50) zur Verarbeitungsvorrichtung (70),
c) Erzeugen einer zweiten Schallinformation zur Erzeugung einer zur zu erwartenden Absorption der eintreffenden Schallwelle in Amplitude und Phasenwinkel angepassten Wandimpedanz der Bootsstruktur,
d) Übertragung der zweiten Schallinformation von der Verarbeitungsvorrichtung (70) zum ersten Aktor (60),
e) Zeitgleiches Anpassen der Wandimpedanz mit der eintreffenden Schallwelle zu ihrer Absorption.

12. Verfahren nach Anspruch 11, **dadurch gekennzeichnet, dass** zusätzlich die Schritte aufweist:
a1) Detektieren einer eintreffenden Schallwelle mit dem dritten Schallsensor (50) und Erzeugen einer dritten Schallinformation,
b1) Übertragen der dritten Schallinformation von dem dritten Schallsensor (50) zur Verarbeitungsvorrichtung (70),
c1) Ermitteln einer Schallrichtungsinformation aus der ersten Schallinformation und der dritten Schallinformation.

13. Verfahren nach einem der Ansprüche 11 bis 12, **dadurch gekennzeichnet, dass** in Schritt c) der Frequenzbereich von 200 bis 1500 Hz, bevorzugt von 10 bis 3000 Hz, betrachtet wird.

14. Verfahren nach einem der Ansprüche 11 bis 13, **dadurch gekennzeichnet, dass** das Unterseeboot (10) ein Sonarsystem aufweist, wobei das Sonarsystem zur Ortung von Kontakten ausgebildet ist, wobei die Kontakte hinsichtlich der Fähigkeit zur Verwendung eines Aktivsonars ausgewertet werden, wobei das Sonarsystem die Position potentieller Kontakte mit Aktivsonar an die Verarbeitungsvorrichtung (70) übergibt, wobei die Verarbeitungsvorrichtung (70) aus den übergebenen Positionsdaten eine Schallwellenrichtung abschätzt, wobei die Schallwellenrichtungsabschätzung in Schritt c) verwendet wird.

15. Verfahren nach einem der Ansprüche 11 bis 14, **dadurch gekennzeichnet, dass** das Unterseeboot (10) mit wenigstens einem ersten autonomen oder ferngesteuerten Unterwasserfahrzeug verbunden ist, wobei das autonome oder ferngesteuerte Unterwasserfahrzeug einen vierten Schallsensor (50) aufweist, wobei der vierte Schallsensor (50) vierte Schallinformationen an die Verarbeitungsvorrichtung (70) übermittelt.
